# EUROPÄISCHE PATENTSCHRIFT

(11) **EP 2 262 625 B1**
(45) Veröffentlichungstag und Bekanntmachung des Hinweises auf die Patenterteilung: **25.04.2012**
(21) Anmeldenummer: 09714147.7
(22) Anmeldetag: 25.02.2009
(51) Int. Cl.: B26D 3/10, B26F 3/12, B25J 15/06, B32B 17/00, B26F 1/38, B26D 1/553

(54) **BEARBEITUNGSEINRICHTUNG UND BEARBEITUNGSVERFAHREN ZUM TRENNEN VON RANDSEITIGEN ÜBERSTÄNDEN**
PROCESSING DEVICE AND PROCESSING METHOD FOR SEPARATING OVERHANGS ON EDGES
DISPOSITIF ET PROCÉDÉ DE TRAITEMENT POUR SÉPARER DES RÉSIDUS MARGINAUX

(30) Priorität: 26.02.2008 DE 202008002669 U
(43) Veröffentlichungstag der Anmeldung: 22.12.2010
(73) Patentinhaber: KUKA Systems GmbH, 86165 Augsburg (DE)
(72) Erfinder: SEMMLINGER, Wolfgang, 86157 Augsburg (DE)
(74) Vertreter: Ernicke, Klaus Stefan
(86) Internationale Anmeldenummer: PCT/EP2009/001324
(87) Internationale Veröffentlichungsnummer: WO 2009/106303

(56) Entgegenhaltungen:
- EP-A- 0 292 971
- EP-A- 0 845 440
- EP-A- 1 190 821
- DE-U1- 8 512 370
- FR-A- 2 754 208

## Beschreibung

Die Erfindung betrifft eine Bearbeitungseinrichtung und ein Verfahren mit den Merkmalen im Oberbegriff des Verfahrens- und Vorrichtungshauptanspruchs.

Aus der DE 851 2370 U1 ist eine Bearbeitungsvorrichtung und ein Verfahren gemäß des Oberbegriffs des Anspruchs 1, bzw. 12 bekannt.

Bei Werkstücken mit randseitigen Überständen, z.B. Photovoltaikplatten mit einem Folienüberstand, besteht das Problem, den Überstand sauber und sicher abtrennen zu können. Auch bei anderen Arten von Werkstücken gibt es ähnliche Probleme. Aus der Praxis ist es bekannt, solche Überstände beim sog. Trimmen von Hand mit einem Messer abzuschneiden.

Es ist Aufgabe der vorliegenden Erfindung, eine geeignete Bearbeitungseinrichtung und ein Verfahren zum maschinellen Abtrennen von Werkstückteilen aufzuzeigen.

Die Erfindung löst diese Aufgabe mit den Merkmalen im Verfahrens- und Vorrichtungshauptanspruch.
Die beanspruchte Trenntechnik hat den Vorteil, dass das Abtrennen von Werkstückteilen schnell, sicher, genau und wirtschaftlich erfolgen kann. Durch die Mehrfachanordnung von Trennelementen können mehrere dieser Elemente gleichzeitig im Eingriff sein. Dies verkürzt die Wege der zwischen Trennkamm und Werkstück auszuführenden Relativbewegung. Außerdem können mehrere Trennelemente nacheinander an der gleichen Stelle des Werkstücks einwirken, was für eine höhere Trennsicherheit und saubere Trennkanten sorgt. Mit der Bearbeitungseinrichtung können sowohl Werkstückteile in Form von randseitigen Überständen, als auch Werkstückteile aus Vollmaterial abgetrennt werden.

Die beanspruchte Bearbeitungseinrichtung ist für den industriellen Einsatz und für alle Arten von Werkstücken geeignet. Eine besondere Eignung besteht für empfindliche Werkstücke, z.B. Photovoltaikmodule. Besonders vorteilhaft ist die Ausbildung und der Einsatz als Folienschneider.

Der Trennprozess kann in beliebiger Weise und mit beliebiger Werkzeuggestaltung durchgeführt werden. Günstig ist der Einsatz von beheizten Schneiddrähten als Trennelemente. Diese sind vor allem für schmelzfähige Werkstückteile, insbesondere Überstände aus Folien oder dergleichen, geeignet. Durch den relativ geringen Energieeintrag der Heizdrähte werden die anderen Werkstückbereiche, die z.B. aus Glas oder dgl. bestehen, nicht beeinträchtigt. Beheizte Schneiddrähte sind außerdem nach allen Seiten hin wirksam und können unterschiedlich gerichtete Trennschnitte erzeugen.

Der Trennkamm mit der Mehrfachanordnung von Schneiddrähten hat bei schmelzfähigen Werkstückteilen den besonderen Vorteil, dass die bei solchen Heizdrähten manchmal auftretenden Verklebungserscheinungen an den bereits getrennten Partien vermieden werden können, indem bei der Relativbewegung zwischen Trennkamm und Werkstück die gleiche Stelle am Überstand durch den Folgedraht mehrmals geschnitten und damit sicher getrennt wird. Zudem wird durch die mehrfache Beaufschlagung mit Heizdrähten der Energieeintrag an den Trennstellen oder -linien des Werkstücks erhöht und die Wirksamkeit verbessert.

Zur Ausführung der für den Trenn- oder Schneidprozess vorgesehenen Relativbewegungen ist eine geeignete Handhabungseinrichtung vorhanden, die wahlweise das Werkstück relativ zum stehenden Trenngerät oder umgekehrt das Trenngerät zum ruhenden Werkstück oder auch beide relativ zueinander bewegt. Die Handhabungseinrichtung kann außerdem überlagerte Hebe- und Senkbewegungen ausführen, die für eine Vergleichmäßigung der Trennelementbelastung sorgen und auch eine Art Sägeeffekt mit ziehendem Schnitt bewirken können.

Eine Positioniereinrichtung kann für ein lagegenaues Greifen des bewegten Teils, insbesondere des Werkstücks sorgen. Eine Ausgleichseinrichtung hat den Vorteil, dass eventuelle Lagefehler zwischen dem Werkstück und dem Trenngerät ohne Beschädigungsgefahr ausgeglichen werden können. Dabei kann der Trennkamm sicher und lagegenau entlang des Werkstückrandes und der vorgesehenen Trennlinie ausgerichtet und entlang bewegt werden. Dies sorgt für einen sicheren und sauberen Trennschnitt und vermeidet Beschädigungen des Werkstücks.

Die Handhabungseinrichtung kann in beliebig geeigneter Weise ausgebildet sein. Vorteilhafterweise kommt ein mehrachsiger Manipulator, insbesondere ein Gelenkarmroboter mit einem geeigneten Handhabungswerkzeug zum Einsatz. Die Relativbewegung zwischen Trenngerät und Werkstück wird dabei vom Manipulator durch eine Bewegung entlang einer vorprogrammierten Bahn ausgeführt. Über die Ausgleichseinrichtung kann bei etwaigen Abweichungen eine Korrektur erfolgen, so dass die vorprogrammierte Bahn mit der vorgesehenen Trennlinie übereinstimmt.

Die beanspruchte Bearbeitungseinrichtung bietet außerdem günstige Entsorgungsmöglichkeiten für die Trennreste. Dank des Trennkamms und der mehrachsigen Relativbewegung wird das abgetrennte Werkstückteil in kleine Stücke zerteilt, die sich leicht und einfach entsorgen lassen. Sie können einerseits nach unten in eine geeignete Aufnahme fallen. Andererseits kann eine Absaugeinrichtung zur Entsorgung vorhanden sein. Diese kann auch etwaig auftretende Dämpfe oder sonstige Emissionen von der Trennstelle entfernen. Eine Überwachungseinrichtung stellt die Verfügbarkeit der Bearbeitungsvorrichtung und die Trennfunktion über die gesamte Länge des Trennkamms sicher. Dies ist besonders von Vorteil, wenn die längsgerichtete Relativbewegung zwischen Trennkamm und Werkstück kürzer als die Bearbeitungs- oder Trennlänge am Werkstück ist.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf eine Bearbeitungseinrichtung,
- Figur 2:: eine perspektivische Ansicht eines Trenngeräts mit einem als Drehtisch ausgebildeten Halter und mit einer Ausgleichseinrichtung,
- Figur 3:: eine Draufsicht auf das Trenngerät von Figur 2,
- Figur 4:: eine vergrößerte perspektivische Ansicht des Trenngeräts mit dem Trennkamm und einer Spanneinrichtung,
- Figur 5:: eine von der Außenwandung entkleidete perspektivische Ansicht des Trenngeräts von Figur 4 und der Spanneinrichtung,
- Figur 6 und 7:: eine Stirnansicht und eine Draufsicht des Trenngeräts,
- Figur 8:: eine Seitenansicht des Trenngeräts gemäß Pfeil VIII von Figur 6,
- Figur 9:: ein Querschnitt durch das Trenngerät gemäß Schnittlinie IX-IX von Figur 7 mit einem Werkstück und
- Figur 10 bis 12:: das Trenngerät und das Werkstück in verschiedenen Betriebsstellungen beim Trennvorgang,
- Figur 13:: eine Variante des Trenngeräts in perspektivischer Ansicht und
- Figur 14 bis 16:: verschiedene Ansichten des Trenngeräts von Figur 13.

Die Erfindung betrifft eine Bearbeitungseinrichtung (1) und ein Verfahren zum Trennen oder Abtrennen von Teilen (9) von Werkstücken (6). Die Erfindung befasst sich außerdem mit der Ausbildung und dem Einsatz eines Trenngeräts (2), das z.B. ein Folienschneider ist.

Die Werkstücke (6) können von beliebiger Art und Größe sein. Es kann sich insbesondere um plattenförmige Werkstücke (6) handeln. Diese können eine oder mehrere Lagen (7,8) aufweisen und z.B. als Photovoltaikmodule ausgebildet sein. Die abzutrennenden Werkstückteile (9) können z.B. randseitige und relativ dünne Überstände am Werkstück (6) sein.

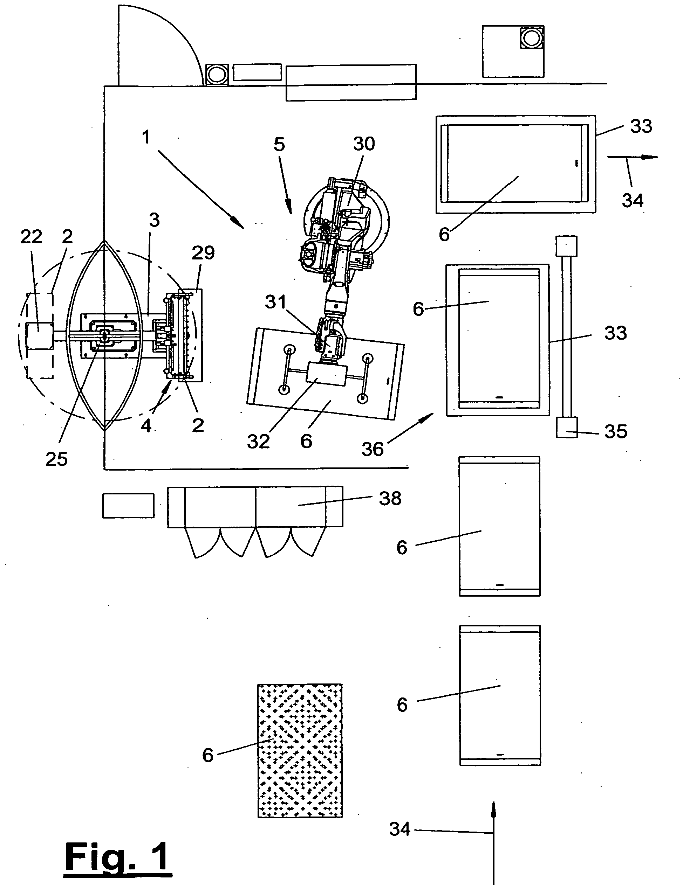

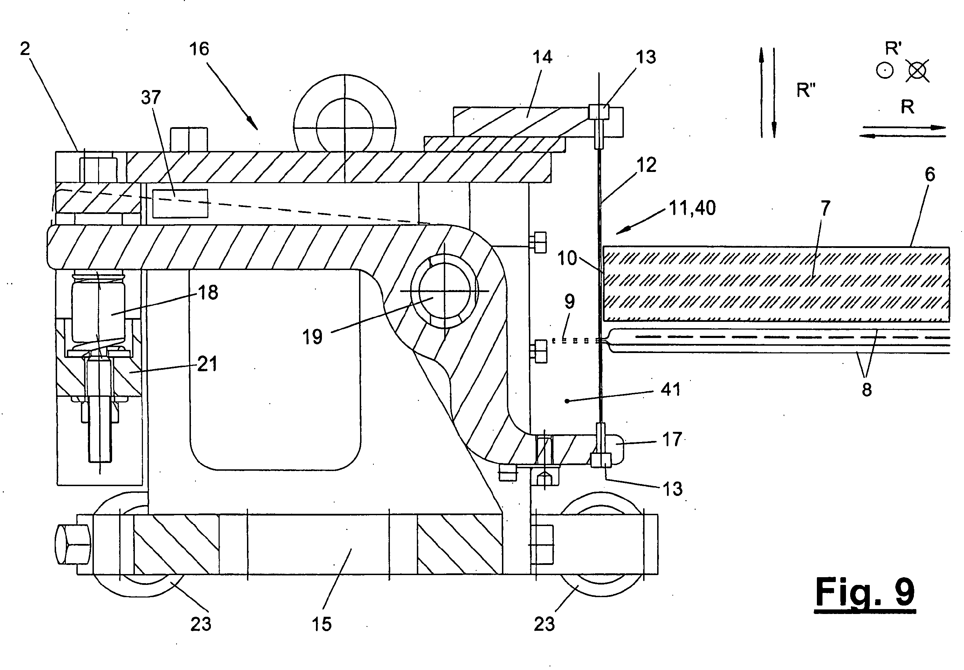

Figur 9 zeigt beispielhaft eine solche Werkstückausbildung als Ausschnitt eines Photovoltaikmoduls. Die erste Lage (7) besteht z.B. aus Glas oder einem anderen lichtdurchlässigen Werkstoff und hat z.B. eine rechteckige Plattenform mit ebenen Oberflächen, wie dies in Figur 1 angedeutet ist. Auf der Platte (7) kann an ein oder beiden Breitseiten mindestens eine weitere dünnere Lage (8) angeordnet sein. Bei einem Photovoltaikmodul besteht diese z.B. aus mehreren, miteinander und mit der Platte (7) verklebten Kunststofffolien, zwischen denen eine gestrichelt dargestellte Lage von Photoelementen oder Silicium-Wafern angeordnet und schützend eingeschlossen ist. Die Folien (8) ragen an ein oder mehreren Seitenrändern (10) über die Glasplatte (7) hinaus und bilden einen Überstand (9), der sauber entlang des besagten Randes (10) oder der hierdurch gebildeten Bearbeitungsseite abgetrennt werden soll.

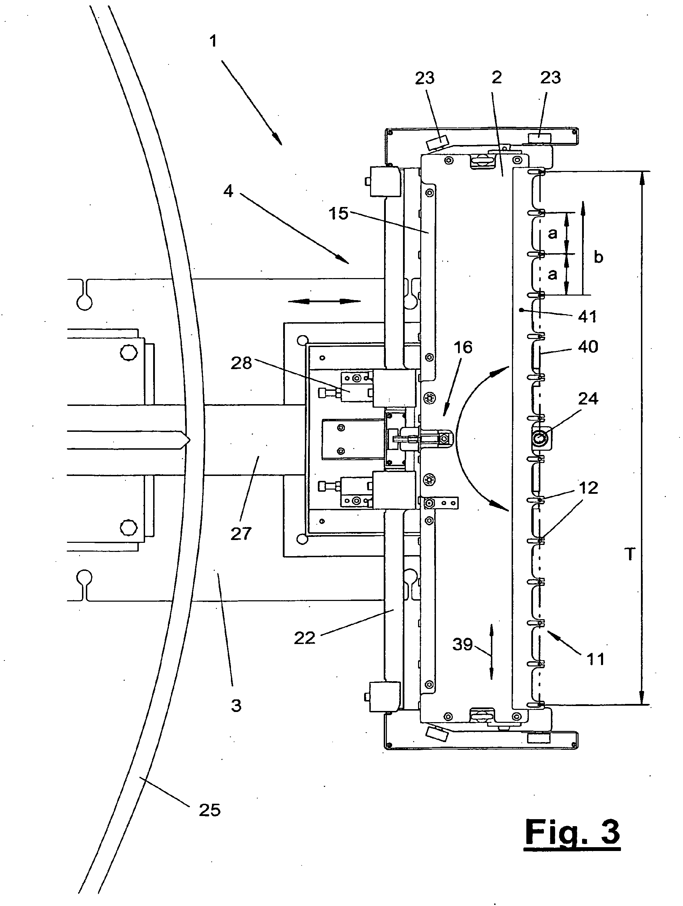

Die Bearbeitungseinrichtung (1) weist mindestens ein Trenngerät (2) auf, das mindestens einen Trennkamm (11) mit mehreren, nebeneinander angeordneten Trennelementen (12) besitzt. Die Trennelemente (12) können im wesentlichen parallel zueinander ausgerichtet und zur Kammbildung in mindestens einer Reihe nebeneinander angeordnet sein, wobei sie eine in Figur 3 strichpunktiert dargestellte Kammebene (40) bilden. Die Trennelemente (12) können in Längserstreckung (39) der Reihe oder des Trennkamms (11) im wesentlichen gleiche Abstände (a) besitzen. Sie sind dabei quer zur Längserstreckung (39) des Trennkamms (11) ausgerichtet. Der Trennkamm (11) befindet sich an der Außenseite des Trenngeräts (2) und ist mit seitlichem Abstand vor einem parallelen balkenförmigen Gestell (15) des Trenngeräts (2) angeordnet. Hierdurch wird zwischen Trennkamm (11) und Gestell (15) ein Freiraum (41) gebildet, dessen Tiefe mindestens so groß wie die Breite des abzutrennenden Überstand (9) ist.

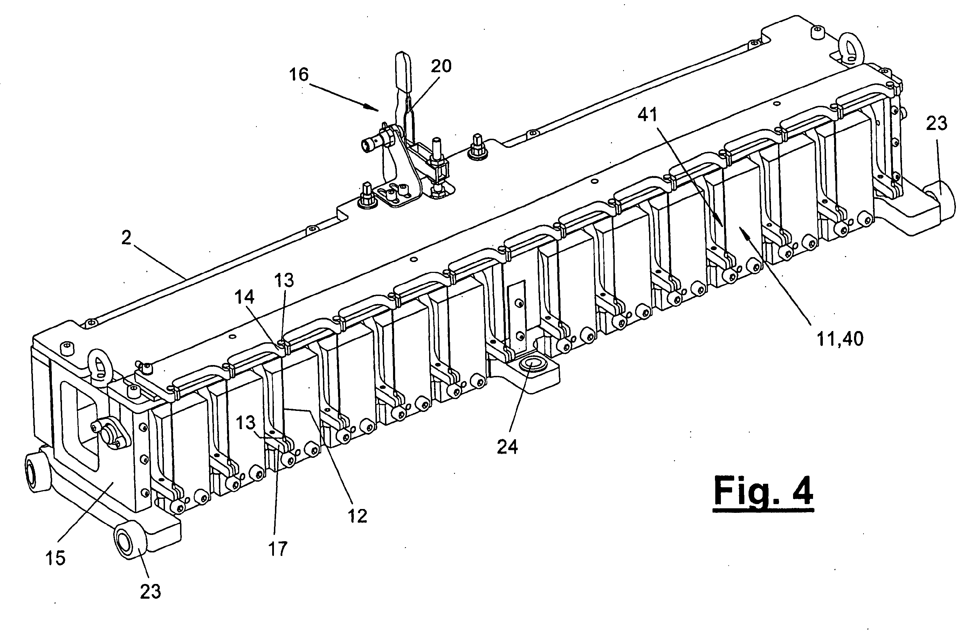

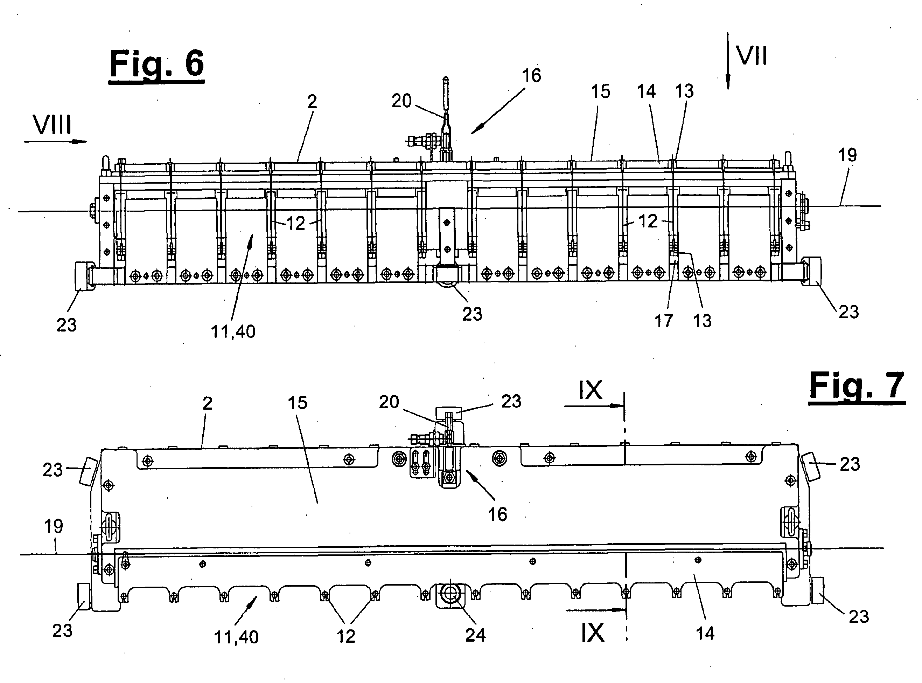

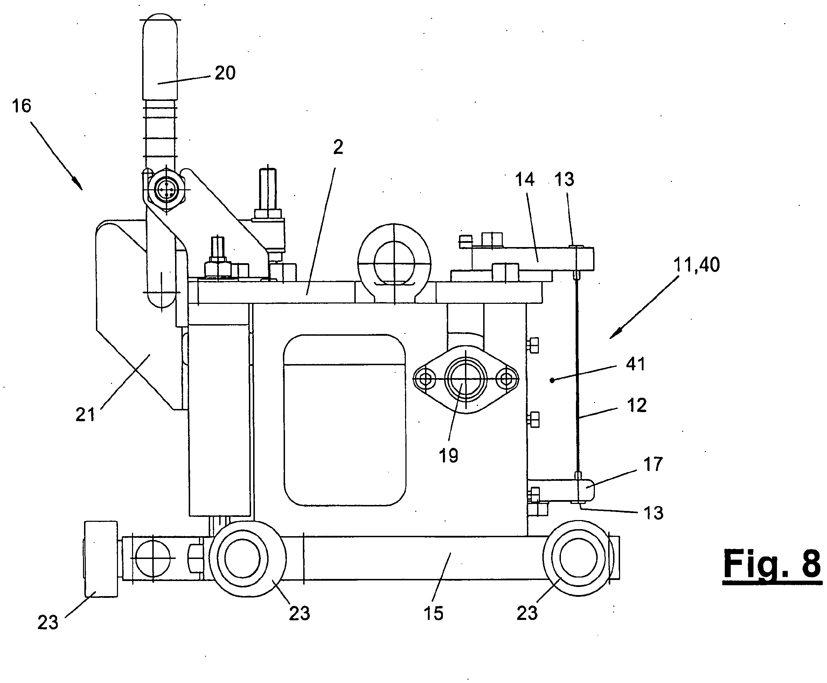

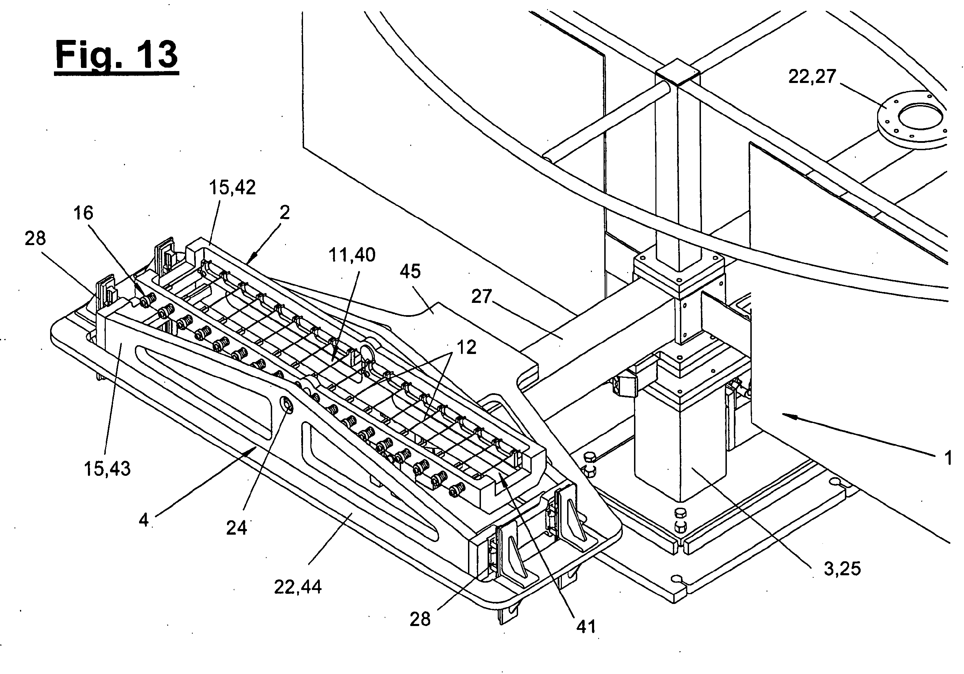

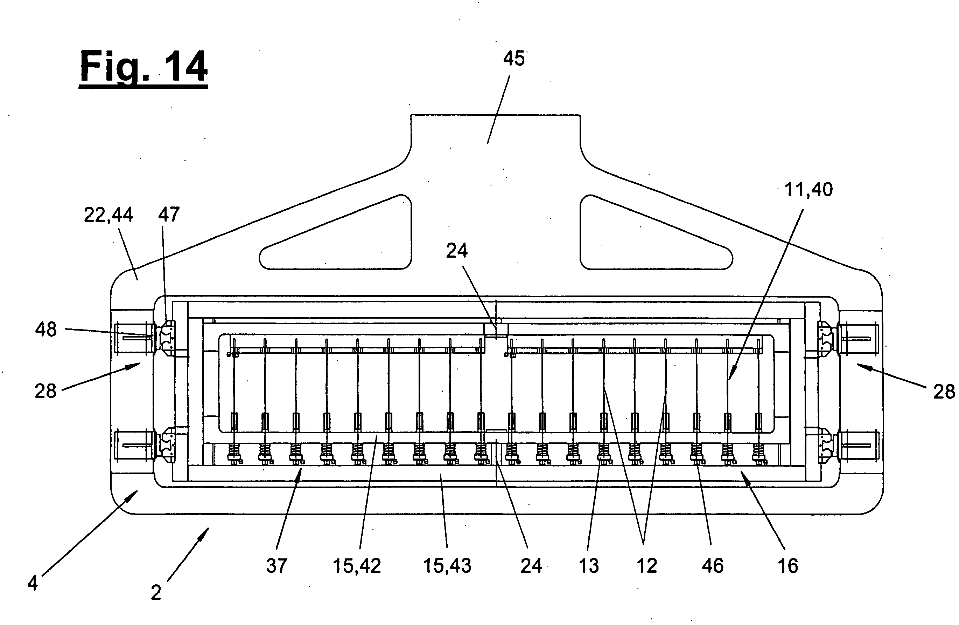

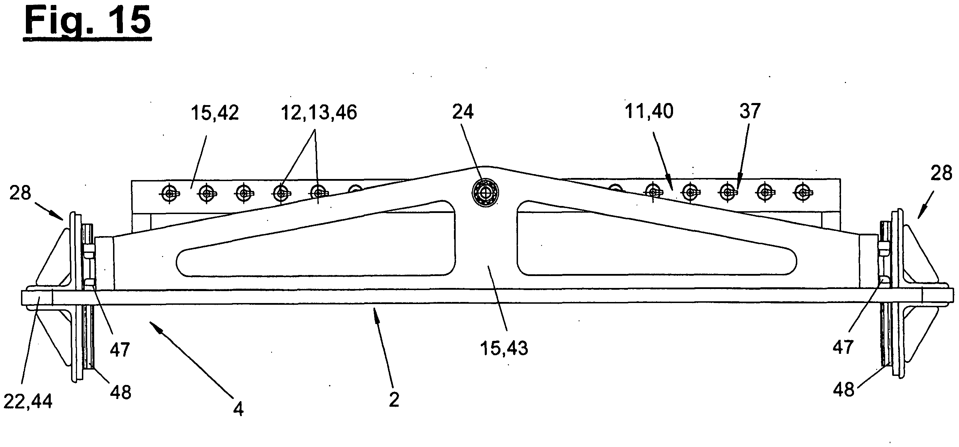

In Figur 1 bis 12 und Figur 13 bis 16 sind zwei Varianten in der Ausbildung des Trenngeräts (2) und der Ausrichtung des Trennkamms (11) dargestellt. In der ersten Variante von Figur 1 bis 12 haben die Trennelemente (12) und die Kammebene (40) eine vertikale Erstreckung, wobei sich das Gestell (15) hinter dem Trennkamm (11) befindet. In der zweiten Variante von Figur 13 bis 16 ist eine horizontale Erstreckung der Trennelemente (12) und der Kammebene (40) mit einer Gestellanordnung unter dem Trennkamm (11) dargestellt.

Die Trennelemente (12) können in beliebiger Weise ausgebildet sein. In den bevorzugten Ausführungsbeispielen handelt es sich um beheizte Schneiddrähte. Sie können mit elektrischem Strom oder auf andere Weise beheizt werden und hierfür eine geeignete Ausbildung haben. Sie können z.B. aus einem bevorzugt metallischen Werkstoff mit einem hohen ohmschen Widerstand bestehen und ggf. eine Beschichtung, z.B. aus Tetrafluoräthylen oder dgl., tragen. Die hierfür vorhandene Heizquelle ist in den Zeichnungen der Übersichtlichkeit halber nicht dargestellt. Die Trennelemente oder Schneiddrähte (12) haben eine Länge, die größer als die Dicke des Werkstücks (6) ist. Die Trennelemente (12) können mit einer Spanneinrichtung (16) auf Zug gehalten und gespannt werden. Das Verhältnis zwischen der Länge des Trennkamms (11) und der Werkstück- oder Bearbeitungslänge kann beliebig sein. Insbesondere kann die Kammlänge kürzer als das Werkstück (6) sein.

Die Bearbeitungseinrichtung (1) besitzt eine Handhabungseinrichtung (5) zur Erzeugung mindestens einer Relativbewegung (R,R',R") zwischen dem Trenngerät (2) und dem Werkstück (6). Wie Figur 9 bis 12 für die erste Variante verdeutlichen, können mehrere Relativbewegungen (R,R',R") nacheinander und/oder überlagert ausgeführt werden.

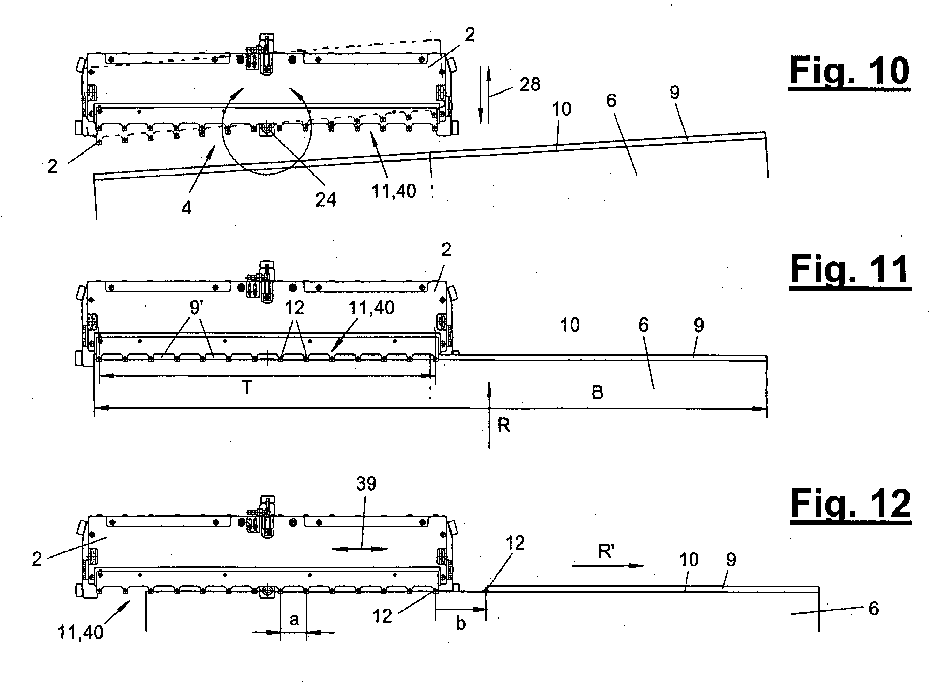

Der Überstand bzw. das Teil (9) wird gemäß Figur 11 an mehreren Stellen unter Bildung von kleinen Teilabschnitten (9') mit den Trennelementen (12) eingeschnitten und unterteilt, wobei die Teilabschnitte (9') in einer nachfolgenden und seitlich verlaufenden Bewegung abgetrennt werden. Hierbei werden eine oder mehrere Relativbewegung (R,R',R") zwischen den Trennelementen (12) und dem Werkstück (6) ausgeführt.

Eine erste Relativbewegung (R) ist quer zur Bearbeitungsseite (10) bzw. zum Rand des Werkstücks (6) und auch quer zur Kammebene (40) ausgerichtet. Hierüber findet zunächst eine quer zum Rand (10) gerichtete Zustellbewegung zwischen dem Trennkamm (11) bzw. dem Trenngerät (2) und dem Werkstück (6) statt, wobei die Trennelemente (12) den Überstand (9) quer durchtrennen, die Teilabschnitte (9') bilden und bis zum Rand (10) gelangen. Anschließend findet eine längs des Randes (10) und der Längserstreckung (39) des Trennkamms (11) gerichtete Relativbewegung (R') statt, mit welcher die Teilabschnitte (9') bzw. der unterteilte Überstand (9) abgetrennt und abgeschnitten werden. Dies ist die vorerwähnte Seitenbewegung.

Bei dieser längsgerichteten Relativbewegung (R') kann außerdem eine überlagerte Hebe- und Senkbewegung (R") quer zur Längserstreckung (39) des Trennkamms (11) und in Erstreckungsrichtung der Trennelemente (12) ausgeführt werden. Die sägeschnittartige Relativbewegung (R,R") hat in diesem Abschnitt durch die Bewegungsüberlagerung eine Wellenform. Diese kann gleichmäßig und z.B. sinusförmig sein. Die Trennelemente (12) werden hierbei an verschiedenen Stellen über ihre Länge und somit gleichmäßig belastet. Eine überlagerte Hebe- und Senkbewegung (R") kann auch bei der Zustellbewegung (R) ausgeführt werden.

Die Handhabungseinrichtung (5) kann in beliebig geeigneter Weise ausgebildet sein. Die Relativbewegung(en) (R,R',R") zwischen Trenngerät (2) und Werkstück (6) können ebenfalls variieren. In den gezeigten Ausführungsbeispielen wird das Werkstück (6) gegenüber dem im wesentlichen ortsfest angeordneten Trenngerät (2) bewegt. Alternativ ist eine kinematische Umkehr mit einer Bewegung des Trenngeräts (2) relativ zum stehenden Werkstück (6) möglich. In einer weiteren Abwandlung können beide Teile (2,6) mobilisiert und relativ zueinander bewegt werden.

Im gezeigten Ausführungsbeispiel von Figur 10 bis 12 wird der Überstand (9) an den beiden Längsseiten des Werkstücks (6) in jeweils zwei oder mehr Schritten abgetrennt. Hierbei wird zunächst gemäß Figur 11 das Werkstück (6) am Trenngerät (2) derart positioniert, dass der Trennkamm (11) etwa die halbe Bearbeitungs- oder Trennlänge (B) überdeckt. Das Werkstück (6) wird dann in der ersten Relativbewegung (R) zugestellt und anschließend in der zweiten seitlichen Relativbewegung (R') entlang der Bearbeitungsseite bzw. des Längsrandes (10) bis zum Werkstückende und ein Stück darüber hinaus bewegt. Figur 12 zeigt diesen Schritt.

Der hierbei zurückgelegte Relativweg (b) zwischen dem Trennkamm (11) und dem Werkstück (6) kann mindestens doppelt so lang wie der Abstand (a) der Trennelemente (12) sein. Diese Zuordnung ist auch in Figur 3 dargestellt. Sie bewirkt, dass bei dieser längsgerichteten Relativbewegung (R') jede Stelle im abzutrennenden Bereich des Überstands (9) von zwei Trennelementen (12) nacheinander überfahren wird. Hierdurch werden etwaige Verklebungen entfernt und die Überstandsstücke sicher abgetrennt. Auch die gesamte im Trennbereich eingebrachte Wärmeenergie wird hierdurch gesteigert. Je nach Art und Material des Überstands (9) könnten die aufgeschmolzenen Überstandsbereiche hinter dem Trennelement (12) wieder miteinander verkleben. Dies wird durch den zweiten Schneiddraht (12) sicher verhindert.

Je nach Art des Überstands (9) kann der Relativweg (b) alternativ verkürzt und nur etwas größer als ein einzelner Abstand (a) sein. Es ist andererseits auch möglich, den Relativweg (b) noch größer zu machen, wobei er eine Länge von zwei oder mehr Abständen (a) hat und entsprechend viele Trennelemente (12) nacheinander an den gleichen Trennstellen am Rand (10) wirken.

Nach dem in Figur 11 und 12 gezeigten ersten Trennschritt wird das Werkstück (6) zurückbewegt, seitlich versetzt und am verbliebenen Überstand (9) in einer neuerlichen Zustellbewegung (R) angesetzt. Die längsgerichteten Relativbewegung (R') wird danach in Gegenrichtung zum anderen Werkstückende hin ausgeführt. Nach der Bearbeitung der einen Längsseite kann das Werkstück (6) gedreht und eine Querseite oder die andere Längsseite in der beschriebenen Weise getrimmt werden.

Wenn die Querseiten kürzer als die Längsseiten sind und die dortige Bearbeitungs- oder Trennlänge (B) im wesentlichen der Kammlänge (T) entspricht, kann ein einziger Trennschritt der vorbeschriebenen Art genügen. Alternativ können auch bei allen Werkstückseiten die längsgerichtete Relativbewegung (R') und der Relativweg (b) derart vergrößert sein, dass das Abtrennen jeweils in einem Schritt erfolgt.

Der Relativweg (b) kann durch den langen Trennkamm (11) in allen Fällen wesentlich kürzer sein als der beaufschlagte Bearbeitungs- und Trennbereich bzw. die gesamte Bearbeitungs- oder Trennlänge (B) am Überstand (9), wodurch die Prozesszeit klein gehalten werden kann.

Die Handhabungseinrichtung (5) ist vorzugsweise als mehrachsiger Manipulator (30) ausgebildet. Dieser kann zwei oder mehr rotatorische und/oder translatorische Achsen in beliebiger Kombination aufweisen. Im gezeigten Ausführungsbeispiel kommt ein Gelenkarmroboter zum Einsatz, der drei rotatorische Armachsen und eine Hand (31) mit zwei oder drei rotatorischen Handachsen besitzt. Der Roboter (30) kann außerdem ein oder mehrere Zusatzachsen, z.B. Fahrachsen, aufweisen. Der Manipulator (30) besitzt eine Manipulatorsteuerung (38), in der die auszuführenden Relativbewegungen (R,R',R") in den verschiedenen Richtungen als Bahn vorgegeben und programmiert sind.

Der Manipulator (30) trägt an seiner mehrachsigen Hand (31) ein geeignetes Handhabungswerkzeug (32), das z.B. als steuerbares Greifwerkzeug für das Werkstück (6) ausgebildet ist und mehrere geeignete Greifelemente, z.B. Saugelemente, Spanner, Greifleisten oder dergleichen an einem Gestell besitzt.

Der Manipulator (30) kann mit dem Handhabungswerkzeug (32) das Werkstück (6) lagegenau greifen. Hierfür kann eine geeignete Positioniereinrichtung (36) vorgesehen sein, die in Figur 1 durch einen Pfeil angedeutet und nicht im einzelnen dargestellt ist. Sie kann z.B. aus Anschlägen bestehen, welche das Werkstück (6) in einer genauen vorgegebenen Position halten, aus der es vom Handhabungswerkzeug (32) definiert gegriffen werden kann. Alternativ kann die Positioniereinrichtung (36) aus einer Vermessungseinrichtung bestehen, welche die tatsächliche Lage und Orientierung des gegriffenen Werkstücks (6) relativ zum Tool-Center-Point (TCP) des Handhabungswerkzeugs (32) ermittelt und eine Vorgabe für die programmierte Bahn entsprechend korrigiert.

Die Bearbeitungseinrichtung (1) kann ferner eine Ausgleichseinrichtung (4) aufweisen, um eventuelle Lageabweichungen zwischen dem Trennkamm (11) mit seiner Reihe von Trennelementen (12) und der Bearbeitungsseite (10) des Werkstücks (6) auszugleichen. Die Ausgleichseinrichtung (4) kann in verschiedener Weise ausgebildet sein.

In den gezeigten Ausführungsbeispielen weist das Trenngerät (2) zwei Ausgleichseinheiten (24,28) auf, mit denen über eine Schwenk- und Verschiebebewegung Lagefehler korrigiert werden können. Figur 10 verdeutlicht hierzu die Funktion.

Die Ausgleichseinheit (24) ist z.B. ein mittig im Bereich des Trennkamms (11) angeordnetes Schwenklager (24), durch das mittels einer Drehbewegung der Trennkamm (11) parallel zur üblicherweise geraden Bearbeitungsseite (10) ausgerichtet werden kann. Das Trenngerät (2) kann dabei bei der quer gerichteten Zustellbewegung (R) in der in Figur 10 gestrichelt angedeuteten Weise geschwenkt werden.

Die zweite Ausgleichseinheit (28) kann ein ausweichfähiger Schlitten sein, der bei der quer gerichteten Zustellbewegung (R) eine ggf. gegen Federkraft gerichtete Rückwärtsbewegung ausführt und etwaige Abstandsunterschiede zwischen Trenngerät (2) und Werkstück (6) kompensiert. Hierdurch werden alle Trennelemente (12) bei der Zustellung bis zum Kontakt mit der Bearbeitungsseite (10) und der Glasplatte (7) bewegt.

Die in Figur 3 bis 9 in verschiedenen und teilweise geschnittenen Ansichten dargestellte erste Variante des Trenngeräts (2) besteht aus einem balkenförmigen und rahmenartig ausgebildeten Gestell (15), an dem der Trennkamm (11) und die Spanneinrichtung (16) sowie die ggf. vorhandene Heizeinrichtung angeordnet sind. Die Trennelemente (12) bestehen aus metallischen Drahtstücken, die an den Enden verdickte Drahthalter (13) aufweisen und mit diesen an einem Ende an einem gestellfesten Träger (14) und am anderen Ende an einem beweglichen Spannhebel (17) eingehängt sind. Wie Figur 9 verdeutlicht, kann der Spannhebel (17) eine abgewinkelte Form haben und um eine längs des Trennkamms (11) verlaufende Achse (19) schwenkbar gelagert sein. Jedes Trennelement (12) kann einen eigenen Spannhebel (17) besitzen. Die kürzeren Schenkel der Spannhebel (17) sind dem Trennelement (12) zugewandt und greifen an dessen unteren Drahthalter (13) an. Die längeren Hebelschenkel wirken mit der Spanneinrichtung (16) zusammen.

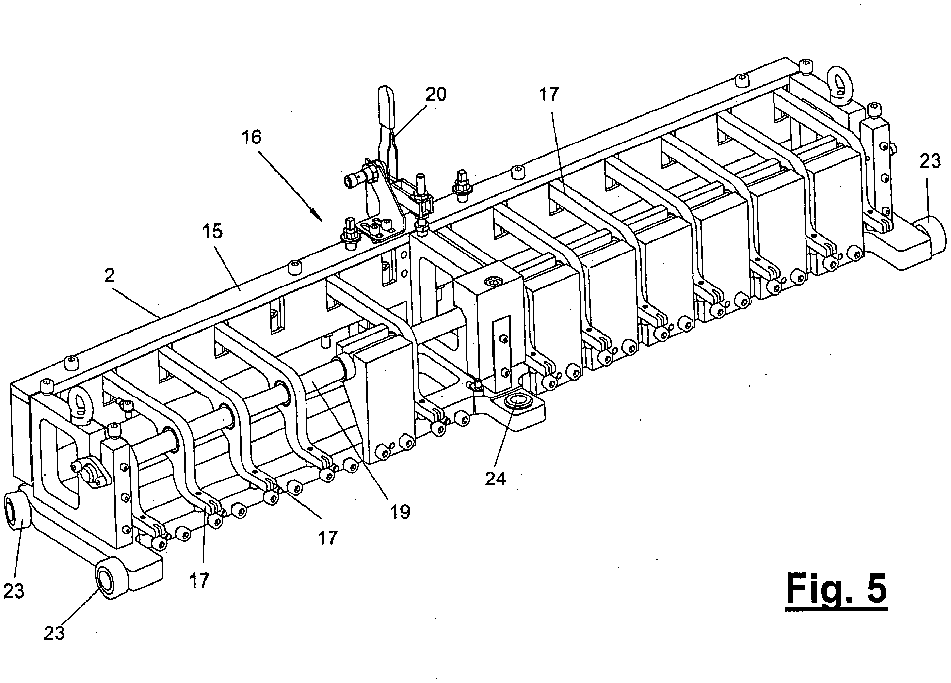

Wie insbesondere Figur 5 und 9 verdeutlichen, besteht die Spanneinrichtung (16) aus einer Spannleiste (21), an der mehrere Federn (18) in einer Reihe längs des Trennkamms (11) angeordnet sind, die jeweils auf einen Spannhebel (17) einwirken und z.B. dessen längeren Hebelschenkel nach oben drücken. Die Spannleiste (21) ist mit einem zentralen Spanner (20) verbunden, der einen Handgriff und einen Kniehebel aufweist und ein Heben und Senken der Spannleiste (21) erlaubt. In der Hebestellung drücken die Federn (18) auf die Spannhebel (17) und spannen die Trennelemente (12). In der Senkstellung sind die Spannhebel (17) freigegeben und die Trennelemente (12) entlastet.

Das Trenngerät (2) kann eine Überwachungseinrichtung (37) für die Trennelemente (12) aufweisen, die in beliebig geeigneter Weise ausgebildet sein kann. Die Trennelemente (12) können einzeln oder gemeinsam auf eventuellen Bruch oder andere Beschädigungen überwacht werden.

Figur 9 zeigt eine Ausführungsvariante für eine gemeinsame Überwachung, mit der die Stellung der federbelasteten Spannelemente (17) überwacht wird. Die Überwachungseinrichtung (37) kann zu diesem Zweck einen optischen Sensor, z.B. eine Lichtschranke aufweisen, die entlang der Spannhebelreihe ausgerichtet und an geeigneter Stelle, z.B. über den oberen Hebelschenkeln angeordnet ist. Wenn ein Schneiddraht (12) bricht, schwenkt der zugehörige Spannhebel (17) durch die Federeinwirkung nach oben in die gestrichelt gezeichnete Stellung, was von der Überwachungseinrichtung (37) erfasst wird. Diese gibt dann ein entsprechendes Alarmsignal ab, was eine manuelle Inspektion und Reparatur des Trennkamms (11) und des beschädigten Trennelements (12) auslöst.

In einer alternativen Ausführungsform ist eine Einzelüberwachung der Trennelemente (12) möglich, wobei z.B. die Überwachungseinrichtung (37) aus einem Stromwächter für jeden Schneiddraht (12) besteht, mit dem der Stromdurchfluss kontrolliert wird. Wenn ein Schneiddraht (12) bricht, wird der Stromfluss unterbrochen, wobei über den zugeordneten Stromwächter auch die Lage des betroffenen Schneiddrahts (12) erfasst und signalisiert werden kann.

Wenn die Überwachungseinrichtung (37) einen Trennelementschaden detektiert und an die Steuerung (38) meldet, kann diese hierauf auch selbsttätig mit einer geänderten Kinematik bei der Relativbewegung (R,R',R") von Trenngerät (2) und Werkstück (6) reagieren. Hierbei kann z.B. der Relativweg (b) um mindestens die Länge eines Trennelementabstands (a) verlängert werden, um trotz des Bruchs mit Sicherheit mindestens ein oder mehrere Trennelemente (12) an jeder Stelle des Trennbereichs entlang zu bewegen.

Die Bearbeitungseinrichtung (1) besitzt einen Halter (3) mit mindestens einer Aufnahme (22) für mindestens ein Trenngerät (2). Die Aufnahme (22) kann z.B. eine Stützplatte aufweisen, auf der das Trenngerät (12) fest oder beweglich aufliegt. Eine bewegliche Auflage ist z.B. für die schwenkbare Ausgleichseinheit (24) günstig. Hierfür weist das Trenngerät (2) an den beiden Enden des Gestells (15) frei drehbare Rollen (23) auf. Zusätzlich kann im mittleren Bereich der dem Schwenklager (24) gegenüber liegenden Seite sowie unterhalb des Spanners (20) eine weitere Rolle (23) vorhanden sein. Das Schwenklager (24) wird z.B. durch eine Drehzapfenverbindung zwischen einem aufnahmeseitigen Bolzen und einem Lagerauge am Gestell (15) gebildet.

Die Aufnahme (22) kann ihrerseits relativ zum Halter (3) beweglich sein, wodurch die lineare Ausgleichseinheit (28) gebildet wird. Der Schlitten (28) ist zwischen der besagten Aufnahme der Platte (22) und einem Arm (27) des Halters (3) angeordnet. Er kann eine in Normallage quer zur Längserstreckung des Trenngeräts (2) gerichtete Bewegungsachse und ggf. eine Rückstellfeder aufweisen. Alternativ ist eine schwimmende Anordnung mit Bewegungsmöglichkeiten in einer quer zu den Trennelementen (12) ausgerichteten Ebene möglich.

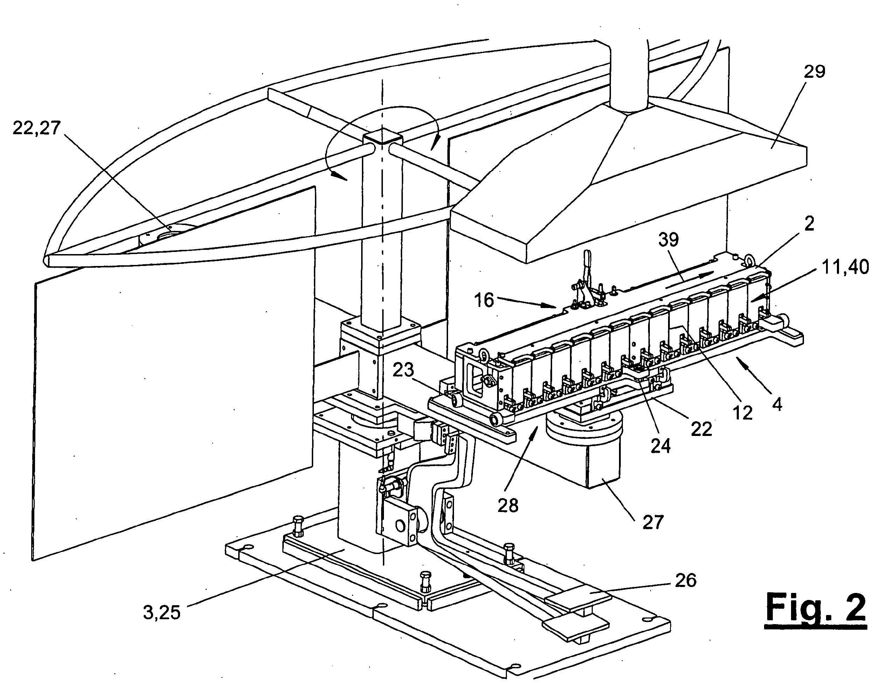

Der Halter (3) kann ein starres Gestell mit dem besagten Arm (27) aufweisen. Er kann alternativ beweglich sein. In der gezeigten Ausführungsform ist der Halter (3) als Drehtisch (25) ausgebildet, der an einer Begrenzung der Bearbeitungseinrichtung (1) angeordnet ist und der zwei entgegengesetzte Arme (27) mit jeweils einer Aufnahme (22) der genannten Art aufweist. Der Drehtisch (25) kann zwei oder mehr Trenngeräte (2) aufnehmen. Diese können gleich oder unterschiedlich ausgebildet sein. Der Drehtisch (25) kann außerhalb des Arbeitsbereichs des Manipulators und einer ggf. vorhandenen Umzäunung von einem Werker bedient werden und besitzt eine geeignete Arretiereinrichtung (26), z.B. einen Fußhebel mit Riegel, um die Drehstellung zu arretieren. Figur 2 zeigt diese Anordnung an der außerhalb des Arbeitsbereichs des Manipulators (30) bzw. außerhalb einer Umzäunung befindlichen Seite des Drehtischs (25). Die gezeigte Anordnung ermöglicht die Wartung und ggf. Reparatur eines Trenngeräts (2) außerhalb der Bearbeitungseinrichtung (1).

Alternativ oder zusätzlich kann der Drehtisch (25) oder eine andere Ausführungsform des Halters (3) einen motorischen und steuerbaren Antrieb aufweisen und mit der Steuerung (38) verbunden sein. Dies erlaubt z.B. einen automatischen Wechsel von Trenngeräten (2) für die Bearbeitung unterschiedlicher Werkstücke (6) oder unterschiedlicher Bereiche eines Werkstücks (6).

Die Bearbeitungseinrichtung (1) kann eine Absaugeinrichtung (29) aufweisen, die in Figur 2 beispielhaft dargestellt ist und sich oberhalb des Trenngeräts (2) befindet. Mit der Absaugeinrichtung (29) können beim Trennvorgang auftretende Dämpfe oder andere Emissionen abgesaugt werden. Die Absaugeinrichtung (29) kann ggf. auch zum Ansaugen der abgetrennten Überstandsstücke dienen. Andererseits ist es möglich, dass die abgetrennten Überstandsstücke einfach nach unten durch den Freiraum zwischen den Trennelementen (12) und dem Gestell (5) fallen. Dieses kann an der Unterseite eine Auffangwanne oder dgl. besitzen.

In der zweiten Variante des Trenngeräts (2) von Figur 13 bis 16 ist das Gestell (15) mehrteilig ausgebildet. Es besteht aus einem im Querschnitt U-förmigen oder rahmenförmigen Kammträger (42), der liegend angeordnet ist und mit seiner Öffnung nach oben weist. An den Seitenstegen des Kammträgers (42) sind die Trennelemente (12) unter Bildung des Kamms (11) und der Kammebene (40) nebeneinander angeordnet, wobei unter ihnen ein Freiraum (41) besteht. Die Kammebene (40) ist hier im wesentlichen horizontal ausgerichtet.

Das Gestell (15) weist ferner ein zweites Gestellteil (43) in Form eines Schlittens auf, der in der Öffnung eines im wesentlichen horizontalen Aufnahmerahmens (44) höhenverstellbar gelagert ist. Der Aufnahmerahmen (44) weist an einer Breitseite einen vorstehenden Ansatz oder Flansch (45) auf, mit dem er am Arm (27) des Halters (3) befestigt ist. Der Halter (3) kann wie im ersten Ausführungsbeispiel als Drehtisch (25) ausgestaltet sein. Der Rahmen (44) bildet eine Aufnahme (22) für das Trenngerät (2).

Das Trenngerät (2) besitzt auch in diesem Ausführungsbeispiel eine Ausgleichseinrichtung (4). Diese kann mehrteilig sein und besteht z.B. aus der als Schwenklager ausgebildeten Ausgleichseinheit (24), mit der der Kammträger (42) um eine horizontale Achse schwenkbar am Schlitten (43) gelagert ist. Der Schlitten (43) kann ebenfalls eine Rahmenform haben und kann den Kammträger (42) in einer Rahmenöffnung aufnehmen. Das Schwenklager (24) befindet sich mittig an beiden Gestellteilen (42,43).

Die Ausgleichseinrichtung (4) beinhaltet ferner eine Ausgleichseinheit (28), die den Gestellteilen (42,43) ein Ausweichen quer zur Kammebene (40) erlaubt und die z.B. als Schlitten ausgebildet ist. Hierfür sind z.B. an den beiden Stirnseiten des Aufnahmerahmens (44) schienenförmige Schlittenteile (48) angeordnet, die mit Schuhen (47) an den Stirnseiten des schlittenförmigen Gestellteils (43) in Verbindung stehen. Die Schienen (48) sind z.B. vertikal und quer zur Hauptebene des Aufnahmerahmens (44) ausgerichtet. Zwischen den Schuhen (47) und den Schienen (48) kann eine elastische Rückstelleinheit, z.B. eine Federanordnung (nicht dargestellt), angeordnet sein.

Der Kammträger (42) kann sich in ähnlicher Weise wie das Gestell (15) in Figur 10 bis 12 bei der Zustellung des Werkstücks (6) um das Schwenklager (24) drehen und parallel zum Rand (10) bzw. zum Überstand (9) ausrichten. Etwaige Positionierungenauigkeiten in Zustellrichtung können durch die Ausweicheinheit (28) ausgeglichen werden. Die abgetrennten Überstandsstücke fallen in den Freiraum (41) und können hier im Falle eines geschlossenen Bodens aufgenommen und in geeigneter Weise entfernt, z.B. ausgeblasen werden. Es ist außerdem möglich, dass der Kammträger (42) rahmenartig ausgebildet ist und einen offenen Boden aufweist, durch den die abgetrennten Überstandsstücke nach unten und durch die Öffnungen im Schlitten (43) und Aufnahmerahmen (44) auf den Hallenboden oder eine dortige Aufnahme fallen können.

Die zweite Variante des Trenngeräts (2) zeigt ferner eine andere Spanneinrichtung (16). Die Trennelemente oder Schneiddrähte (12) sind mit einem Ende am einen Seitensteg des Kammträgers (42) eingehängt und ragen mit einem Drahthalter (13) durch den gegenüberliegenden Steg. Die Spanneinrichtung (16) weist bei dieser Ausführungsform einzelne Federn (46) auf jedem Drahthalter (13) auf, die an der Außenseite des Kammträgers (42) angeordnet sind und sich zwischen die Trägeraußenwand und einen Bund des Drahtträgers (13) einspreizen. Hierdurch wird das Trennelement (12) auf Zug belastet und gespannt.

Das Trenngerät (2) kann auch in der zweiten Variante eine Überwachungseinrichtung (37) für einen evtl. Bruch der Trennelemente (12) aufweisen. Hierfür können z.B. an den Drahthaltern (13) Sensoren angeordnet sein oder mit den Drahthaltern (13) zusammenwirken. Bei einem Drahtbruch verlagert sich der Drahthalter (13) unter Federwirkung nach außen, was vom Sensor detektiert wird.

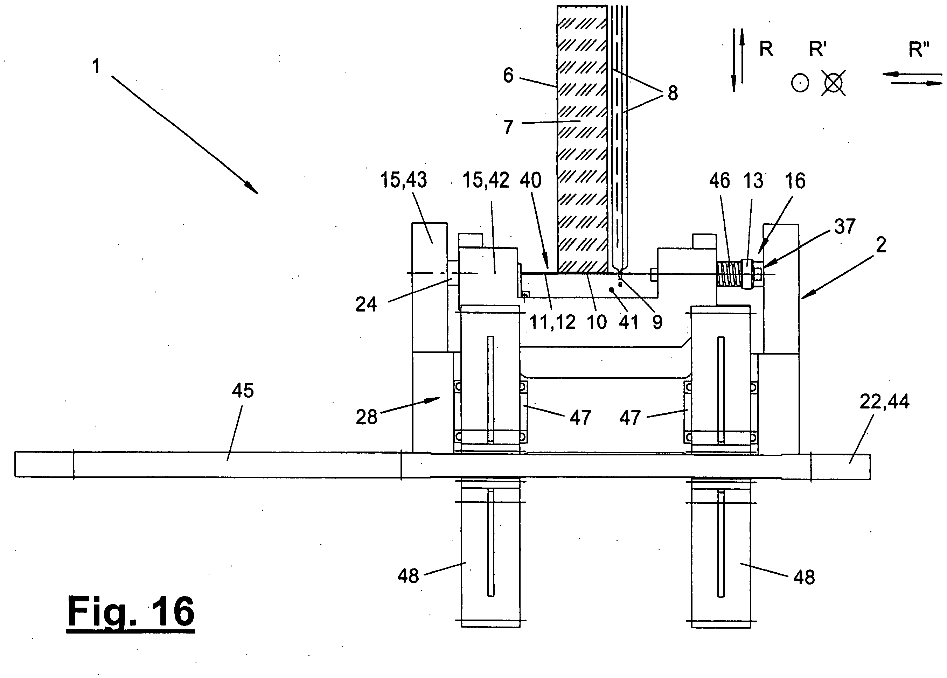

Figur 16 verdeutlicht die Relativbewegungen (R,R' und R") des in diesem Fall vertikal gehaltenen Werkstücks (6). Mit dem Zustellweg (R) wird das Werkstück (6) vertikal und quer zur Kammebene (40) an den Trennkamm (11) zugestellt, wobei die Trennelemente (12) den Überstand (9) bis zum Rand (10) des Werkstücks (6) einschneiden und Teilabschnitte (9') bilden. Anschließend findet eine horizontale Relativbewegung (R') entlang der Kammebene (40) zum Abtrennen der eingeschnittenen Überstandteile (9') statt. Hierbei kann wie im ersten Ausführungsbeispiel eine überlagerte und längs der Trennelemente (12) ausgerichtete Relativbewegung (R") stattfinden.

Gemäß Figur 1 kann die von einem Schutzzaun oder dgl. umgebene Bearbeitungseinrichtung (1) weitere Komponenten aufweisen. Dies ist z.B. ein schematisch durch einen Pfeil angedeuteter Förderer (34), auf dem die Werkstücke (6) in die Bearbeitungseinrichtung bzw. in die hiervon gebildete Bearbeitungsstation gebracht werden. Im Arbeitsbereich der Handhabungseinrichtung (5) können sich ein oder mehrere Ablagen (33) für die Werkstücke (6) befinden. An einer Ablage (33) kann außerdem eine Schwenkeinrichtung (35) angeordnet sein, um das Werkstück (6) bei Bedarf wenden zu können. Ein weiterer Förderer (34) kann für den Abtransport der Werkstücke (6) sorgen. Zudem kann eine manuelle Trimmstation vorhanden sein.

Abwandlungen der gezeigten und beschriebenen Ausführungsform sind in verschiedener Weise möglich. Das Trenngerät (2) kann z.B. mehrere und an verschiedenen Längsseiten befindliche Trennkämme (11) und eine Wendeeinrichtung am Gestell (15) aufweisen. Die Trennelemente (12) können als stationäre oder bewegliche Trennmesser, Sägeleisten oder dergleichen ausgebildet sein und zueinander versetzte Wirkbereiche für die verschiedenen Relativbewegungen (R,R',R") besitzen. Die Relativbewegungen (R,R',R") können eine andere Zahl, Reihenfolge und Kinematik haben. Die Trennelemente (12) können mit gegenseitigem Versatz angeordnet sein und mehrere Reihen oder Kammebenen (40) bilden.

Wesentliche und grundlegende Aspekte der Erfindung sind u.a., dass die Bearbeitungseinrichtung (1) zum Abtrennen von Teilen (9) von Werkstücken, insbesondere von randseitigen Überständen von Platten, ein Trenngerät (2) mit mindestens einem Trennkamm (11) aufweist, der mehrere nebeneinander angeordnete Trennelemente (12) besitzt. Ein weiterer Erfindungsaspekt sieht vor, dass die Bearbeitungseinrichtung (1) eine Handhabungseinrichtung (5) zur Erzeugung einer Relativbewegung (R) zwischen dem Trenngerät (2) und dem Werkstück (6) aufweist. Für die Relativbewegung kann es auch andere als die vorstehend beschriebenen Kinematiken geben. Diese Erfindungsaspekte können mit den Merkmalen der Unteransprüche ergänzt werden.

### BEZUGSZEICHENLISTE

- 1: Bearbeitungseinrichtung, Trimmeinrichtung
- 2: Trenngerät
- 3: Halter
- 4: Ausgleichseinrichtung
- 5: Handhabungseinrichtung
- 6: Werkstück, Photovoltaikmodul
- 7: Lage, Glas
- 8: Lage, Folien
- 9: Werkstückteil, Überstand
- 9': Teilabschnitt
- 10: Bearbeitungsseite, Rand
- 11: Trennkamm
- 12: Trennelement, Schneiddraht
- 13: Drahthalter
- 14: Träger
- 15: Gestell
- 16: Spanneinrichtung
- 17: Spannhebel
- 18: Feder
- 19: Achse
- 20: Spanner
- 21: Spannleiste
- 22: Aufnahme für Trenngerät
- 23: Rolle
- 24: Ausgleichseinheit, Schwenklager
- 25: Drehtisch
- 26: Arretiereinrichtung
- 27: Arm
- 28: Ausgleichseinheit, Schlitten
- 29: Absaugeinrichtung
- 30: Manipulator, Roboter
- 31: Hand
- 32: Handhabungswerkzeug, Greifwerkzeug
- 33: Ablage
- 34: förderer
- 35: Schwenkeinrichtung
- 36: Positioniereinrichtung
- 37: Überwachungseinrichtung
- 38: Steuerung, Manipulatorsteuerung
- 39: Längsrichtung, Längserstreckung
- 40: Kammebene
- 41: Freiraum
- 42: Gestellteil, Kammträger
- 43: Gestellteil, Schlitten
- 44: Aufnahmerahmen
- 45: Ansatz, Flansch
- 46: Feder
- 47: Schlittenteil, Schuh
- 48: Schlittenteil, Schiene

- a: Abstand Trennelement
- b: Relativweg, Schneidweg
- R: Relativbewegung, Zustellbewegung quer
- R': Relativbewegung, Trennbewegung längs
- R": Relativbewegung, Hebe- und Senkbewegung
- T: Länge Trennkamm
- B: Bearbeitungslänge, Trennlänge

## Patentansprüche

1. Bearbeitungseinrichtung zum Abtrennen von Teilen (9) von Werkstücken (6), insbesondere randseitigen Überständen von Platten, wobei die Bearbeitungseinrichtung (1) ein Trenngerät (2) mit mindestens einem Trennkamm (11) mit mehreren nebeneinander in einer Kammebene (40) angeordneten Trennelementen (12) und eine Handhabungseinrichtung (5) zur Erzeugung einer Relativbewegung (R,R') zwischen dem Trenngerät (2) und dem Werkstück (6) aufweist, wobei die Relativbewegung (R,R') quer zur Kammebene (40) und in deren Längserstreckung (39) gerichtete ist, wobei die Trennelemente (12) im wesentlichen parallel und mit gleichen Abständen (a) angeordnet sind, **dadurch gekennzeichnet, dass** der Relativweg (b) zwischen dem Trennkamm (11) und dem Werkstück (6) länger als der Abstand (a) ist.

2. Bearbeitungseinrichtung nach Anspruch 1, **dadurch gekennzeichnet, dass** die Relativbewegung (R,R') quer und längs zur Bearbeitungsseite (10) des Werkstücks (6) ausgerichtet ist und zusätzlich eine Hebe- und Senkbewegung (R") quer zum Trennkamm (11) aufweist.

3. Bearbeitungseinrichtung nach Anspruch 1 oder 2, **dadurch gekennzeichnet, dass** der Relativweg (b) zwischen dem Trennkamm (11) und dem Werkstück (6) mindestens doppelt so lang wie der Abstand (a) ist.

4. Bearbeitungseinrichtung nach Anspruch 1, 2 oder 3, **dadurch gekennzeichnet, dass** die Trennelemente (12) an mindestens einer Außenseite des Trenngeräts (2) angeordnet und quer zu dessen Längserstreckung angeordnet sind.

5. Bearbeitungseinrichtung nach einem der vorhergehenden Ansprüche, **dadurch gekennzeichnet, dass** das Trenngerät (2) ein Gestell (15) zur Aufnahme des Trennkamms (11) und eine Spanneinrichtung (16) für die Trennelemente (12) aufweist.

6. Bearbeitungseinrichtung nach einem der vorhergehenden Ansprüche, **dadurch gekennzeichnet, dass** die Bearbeitungseinrichtung (1) eine Ausgleichseinrichtung (4) zur Lageanpassung von Trenngerät (2) und Werkstück (6) aufweist.

7. Bearbeitungseinrichtung nach einem der vorhergehenden Ansprüche, **dadurch gekennzeichnet, dass** die Ausgleichseinrichtung (4) eine rotatorische und eine translatorische Ausgleichseinheit (24,28) aufweist.

8. Bearbeitungseinrichtung nach Anspruch 6, **dadurch gekennzeichnet, dass** die rotatorische Ausgleichseinheit (24) als Schwenklager zwischen dem Trenngerät (2) und der Aufnahme (22) ausgebildet ist und die translatorische Ausgleichseinheit (28) als Schlitten der Aufnahme (22) ausgebildet ist.

9. Bearbeitungseinrichtung nach einem der vorhergehenden Ansprüche, **dadurch gekennzeichnet, dass** die Handhabungseinrichtung (5) mindestens einen mehrachsig beweglichen Manipulator (30), insbesondere einen Gelenkarmroboter mit einer mehrachsigen Hand (31), mit einem Handhabungswerkzeug (32) für mindestens ein Werkstück (6) aufweist.

10. Bearbeitungseinrichtung nach einem der vorhergehenden Ansprüche, **dadurch gekennzeichnet, dass** die Bearbeitungseinrichtung (1) eine Positioniereinrichtung (36) zum lagegenauen Ausrichten und Greifen der Werkstücke (6) aufweist.

11. Bearbeitungseinrichtung nach einem der vorhergehenden Ansprüche, **dadurch gekennzeichnet, dass** die Bearbeitungseinrichtung (1) eine Überwachungseinrichtung (37) für die Trennelemente (12) aufweist.

12. Verfahren zum Abtrennen von Teilen (9) von Werkstücken (6), insbesondere randseitigen Überständen von Platten, wobei das Teil (9) von einem Trennkamm (11) mit mehreren nebeneinander in einer Kammebene (40) angeordneten Trennelementen (12) an mehreren Stellen unter Bildung von Teilabschnitten (9') mit Trennelementen (12) eingeschnitten wird und die Teilabschnitte (9') in einer nachfolgenden Seitenbewegung abgetrennt werden, **dadurch gekennzeichnet, dass** die Teilabschnitte (9') bei der Seitenbewegung von mehreren aufeinander folgenden Trennelementen (12) beaufschlagt werden.

13. Verfahren nach Anspruch 12, **dadurch gekennzeichnet, dass** beim Abtrennen eine Relativbewegung (R,R') zwischen dem Trennkamm (11) und dem Werkstück (6) ausgeführt wird, die quer und längs zu einer Bearbeitungsseite (10) des Werkstücks (6) ausgerichtet ist.

14. Verfahren nach Anspruch 12 oder 13, **dadurch gekennzeichnet, dass** mit dem Trennkamm (11) zusätzlich eine Hebe- und Senkbewegung (R") längs der Trennelemente (12) ausgeführt wird.

15. Verfahren nach Anspruch 12, 13 oder 14, **dadurch gekennzeichnet, dass** das Werkstück (6) mit einer Handhabungseinrichtung (5) relativ zum Trennkamm (11) bewegt wird.

## Claims

1. Processing device for the separation of parts (9) of workpieces (6), in particular marginal overhangs of plates, the processing device (1) having a separating appliance (2) with at least one separating comb (11) with a plurality of separating elements (12) arranged next to one another in a comb plane (40), and a handling device (5) for generating a relative movement (R, R') between the separating appliance (2) and the workpiece (6), the relative movement (R, R') being directed transversely to the comb plane (40) and along its longitudinal extent (39), the separating elements (12) being arranged essentially parallel and at equal intervals (a), **characterized in that** the relative travel (b) between the separating comb (11) and the workpiece (6) is longer than the interval (a).

2. Processing device according to Claim 1, **characterized in that** the relative movement (R, R') is orientated transversely and longitudinally with respect to the processing side (10) of the workpiece (6) and additionally has a raising and lowering movement (R") transversely to the separating comb (11).

3. Processing device according to Claim 1 or 2, **characterized in that** the relative travel (b) between the separating comb (11) and the workpiece (6) is at least twice as long as the interval (a).

4. Processing device according to Claim 1, 2 or 3, **characterized in that** the separating elements (12) are arranged on at least one outer face of the separating appliance (2) and are arranged transversely to the longitudinal extent of the latter.

5. Processing device according to one of the preceding claims, **characterized in that** the separating appliance (2) has a frame (15) for receiving the separating comb (11) and a tension device (16) for the separating elements (12).

6. Processing device according to one of the preceding claims, **characterized in that** the processing device (1) has a compensating device (4) for adapting the position of the separating appliance (2) and workpiece (6).

7. Processing device according to one of the preceding claims, **characterized in that** the compensating device (4) has a rotational and a translational compensating unit (24, 28).

8. Processing device according to Claim 6, **characterized in that** the rotational compensating unit (24) is designed as a pivot bearing between the separating appliance (2) and the receptacle (22), and the translational compensating unit (28) is designed as a slide of the receptacle (22).

9. Processing device according to one of the preceding claims, **characterized in that** the handling device (5) has at least one multiaxially movable manipulator (30), in particular an articulated-arm robot with a multiaxial hand (31), with a handling tool (32) for at least one workpiece (6).

10. Processing device according to one of the preceding claims, **characterized in that** the processing device (1) has a positioning device (36) for the exactly positioned aligning and gripping of the workpieces (6).

11. Processing device according to one of the preceding claims, **characterized in that** the processing device (1) has a monitoring device (37) for the separating elements (12).

12. Method for the separation of parts (9) of workpieces (6), in particular marginal overhangs of plates, the part (9) being indented by a separating comb (11), having a plurality of separating elements (12) arranged next to one another in a comb plane (40), at a plurality of locations, so as to form subsections (9') with separating elements (12), and the subsections (9') being separated in a subsequent lateral movement, **characterized in that** the subsections (9') are acted upon during the lateral movement by a plurality of successive separating elements (12).

13. Method according to Claim 12, **characterized in that**, during separation, a relative movement (R, R') between the separating comb (11) and the workpiece (6) is executed, which is oriented transversely and longitudinally with respect to a processing side (10) of the workpiece (6).

14. Method according to Claim 12 or 13, **characterized in that** a raising and lowering movement (R") along the separating elements (12) is additionally executed by the separating comb (11).

15. Method according to Claim 12, 13 or 14, **characterized in that** the workpiece (6) is moved in relation to the separating comb (11) by means of a handling device (5).

## Revendications

1. Dispositif d'usinage pour séparer des parties (9) de pièces (6), en particulier des projections marginales de plaques, le dispositif d'usinage (1) présentant un appareil de séparation (2) avec au moins un peigne de séparation (11) ayant plusieurs éléments de séparation (12) disposés les uns à côté des autres dans un plan du peigne (40) et un dispositif de manipulation (5) pour produire un mouvement relatif (R, R') entre l'appareil de séparation (2) et la pièce (6), le mouvement relatif (R, R') étant orienté transversalement au plan du peigne (40) et étant orienté suivant son étendue longitudinale (39), les éléments de séparation (12) étant disposés sensiblement parallèlement et à distances égales (a), **caractérisé en ce que** le trajet relatif (b) entre le peigne de séparation (11) et la pièce (6) est plus long que la distance (a).

2. Dispositif d'usinage selon la revendication 1, **caractérisé en ce que** le mouvement relatif (R, R') est orienté transversalement et longitudinalement par rapport au côté d'usinage (10) de la pièce (6) et présente en outre un mouvement de levage et d'abaissement (R") transversalement au peigne de séparation (11).

3. Dispositif d'usinage selon la revendication 1 ou 2, **caractérisé en ce que** le trajet relatif (b) entre le peigne de séparation (11) et la pièce (6) est au moins deux fois plus long que la distance (a).

4. Dispositif d'usinage selon la revendication 1, 2 ou 3, **caractérisé en ce que** les éléments de séparation (12) sont disposés sur au moins un côté extérieur de l'appareil de séparation (2) et sont disposés transversalement à son étendue longitudinale.

5. Dispositif d'usinage selon l'une quelconque des revendications précédentes, **caractérisé en ce que** l'appareil de séparation (2) présente un bâti (15) pour recevoir le peigne de séparation (11) et un dispositif de serrage (16) pour les éléments de séparation (12).

6. Dispositif d'usinage selon l'une quelconque des revendications précédentes, **caractérisé en ce que** le dispositif d'usinage (1) présente un dispositif d'équilibrage (4) pour l'adaptation de la position de l'appareil de séparation (2) et de la pièce (6).

7. Dispositif d'usinage selon l'une quelconque des revendications précédentes, **caractérisé en ce que** le dispositif d'équilibrage (4) présente une unité d'équilibrage à mouvement de rotation et une unité d'équilibrage à mouvement de translation (24, 28).

8. Dispositif d'usinage selon la revendication 6, **caractérisé en ce que** l'unité d'équilibrage à mouvement de rotation (24) est réalisée sous forme de palier pivotant entre l'appareil de séparation (2) et le logement (22) et l'unité d'équilibrage à mouvement de translation (28) est réalisée sous forme de chariot du logement (22).

9. Dispositif d'usinage selon l'une quelconque des revendications précédentes, **caractérisé en ce que** le dispositif de manipulation (5) présente au moins un manipulateur (30) mobile à plusieurs axes, en particulier un robot à bras articulés avec une main à plusieurs axes (31), avec un outil de manipulation (32) pour au moins une pièce (6).

10. Dispositif d'usinage selon l'une quelconque des revendications précédentes, **caractérisé en ce que** le dispositif d'usinage (1) présente un dispositif de positionnement (36) pour l'orientation et la préhension précises des pièces (6).

11. Dispositif d'usinage selon l'une quelconque des revendications précédentes, **caractérisé en ce que** le dispositif d'usinage (1) présente un dispositif de surveillance (37) pour les éléments de séparation (12).

12. Procédé de séparation de parties (9) de pièces (6), en particulier des projections marginales de plaques, la partie (9) étant entaillée avec des éléments de séparation (12) par un peigne de séparation (11) ayant plusieurs éléments de séparation (12) disposés les uns à côté des autres dans un plan du peigne (40) en plusieurs endroits en formant des portions de parties (9'), et les portions de parties (9') étant séparées par un mouvement latéral subséquent, **caractérisé en ce que** les portions de parties (9') sont sollicitées lors du mouvement latéral par plusieurs éléments de séparation (12) successifs.

13. Procédé selon la revendication 12, **caractérisé en ce que** lors de la séparation, un mouvement relatif (R, R') entre le peigne de séparation (11) et la pièce (6) est effectué, lequel est orienté transversalement et longitudinalement par rapport à un côté d'usinage (10) de la pièce (6).

14. Procédé selon la revendication 12 ou 13, **caractérisé en ce qu'**un mouvement de levage et d'abaissement (R") est en outre effectué avec le peigne de séparation (11) le long des éléments de séparation (12).

15. Procédé selon la revendication 12, 13 ou 14, **caractérisé en ce que** la pièce (6) est déplacée par rapport au peigne de séparation (11) avec un dispositif de manipulation (5).
